# EUROPÄISCHE PATENTSCHRIFT

(11) **EP 3 123 228 B1**
(45) Veröffentlichungstag und Bekanntmachung des Hinweises auf die Patenterteilung: **12.07.2017**
(21) Anmeldenummer: 15712839.8
(22) Anmeldetag: 19.03.2015
(51) Int. Cl.: G02B 21/00, G01B 9/04, G02B 21/36

(54) **KONFOKALES MIKROSKOP MIT APERTURKORRELATION**
CONFOCAL MICROSCOPE WITH APERTURE CORRELATION
MICROSCOPE CONFOCAL À CORRÉLATION D'OUVERTURE

(30) Priorität: 24.03.2014 DE 102014004249
(43) Veröffentlichungstag der Anmeldung: 01.02.2017
(73) Patentinhaber: Carl Zeiss Microscopy GmbH, 07745 Jena (DE)
(72) Erfinder: LANGHOLZ, Nils, 99510 Apolda (DE); DRESCHER, Viktor, 99444 Blankenhain (DE); LIPPERT, Helmut, 07745 Jena (DE); SCHWERDTFEGER, Wolfgang, 99428 Weimar (DE)
(74) Vertreter: Müller, Silke
(86) Internationale Anmeldenummer: PCT/EP2015/055800
(87) Internationale Veröffentlichungsnummer: WO 2015/144557

(56) Entgegenhaltungen:
- DE-A1- 19 922 593
- DE-A1-102010 015 428
- US-B1- 6 320 185

## Beschreibung

Die Erfindung betrifft ein konfokales Mikroskop mit Aperturkorrelation gemäß dem oberbegriff des Anspruchs 1 sowie ein Verfahren und Software zu dessen Betrieb.

Ein Hauptvorteil der konfokalen Mikroskopie liegt darin, dass durch die Abweisung von Licht, das von außerhalb der fokalen Ebene kommt, eine schichtweise Aufnahme eines zu beobachtenden Objektes mit verbessertem Kontrast in den einzelnen Schichten möglich ist. Dies ermöglicht die Rekonstruktion einer dreidimensionalen Struktur des Objektes.

Verschiedene Verfahren der konfokalen Mikroskopie sind im Stand der Technik bekannt. Am meisten verbreitet ist wohl die konfokale Laser-Scanning-Mikroskopie (Laser Scanning Confocal Microscopy). Durch die scannende (pixelweise) Aufnahme einzelner Punkte einer Probe wird eine vergleichsweise lange Zeit zur Erzeugung eines Gesamtbildes benötigt.

Bekannt sind ebenfalls scannende Systeme, bei denen parallel mehrere Punkte erfasst werden. Durch die Verwendung von Laserlicht sind diese Systeme teuer. Außerdem besitzt Laserlicht nur ein schmalbandiges Spektrum, so dass spektrale Auswertungen von Bildinformationen begrenzt sind.

Der Softwarealgorithmus zur Demodulation der Rohdaten des Bildes muss den modulierten Teil des Signal filtern und mehrere Bilder aus verschiedenen Maskenpositionen zur einem Gesamtbild verrechnen.

Bei der Apertur-Korrelation werden die Geschwindigkeitsvorteile bei der Bildaufnahme, die sich aus der Verwendung einer konfokalen Spinning-Disc ergeben, genutzt. Dabei werden aber gleichzeitig die Nachteile vermieden, die sich bei der Verwendung einer konfokalen Spinning Disk oder z.B. einer lateral scannenden Schlitzmaske ergeben. Bei der Apertur-Korrelation wird der störende Cross-talk - Licht dass die Konfokalität verletzt, da es durch ein anderes Pinhole in der Detektion als bei der Belichtung hindurchringt - akzeptiert. Bei der Apertur-Korrelation wird der Cross-talk virtuell durch die Verrechnung mit dem nicht konfokalen Bild eliminiert. Bei einer konfokalen Spinning-Disc würde dieser Cross-talk letztendlich in optischen Artefakten resultieren, die sich auch in der später zu berechnenden Topographie niederschlagen.

Ein solches Verfahren ist auch beschrieben in der DE 697 04 54 T2. Es werden jeweils nacheinander die Bilder der verschiedenen Sektionen (Composite und Weitfeld) aufgenommen, subtrahiert und dargestellt. Da die Aufnahme von Composite-Bild und Weitfeldbild nacheinander während einer Umdrehung der Scheibe und danach erst die Subtraktion erfolgt, kann die Wiedergabesequenz höchstens halb so groß der Aufnahmesequenz sein. Eine Livebilddarstellung ist hiermit nicht möglich.

In der US 6,341,035 B1 wird ein Verfahren nach dem oben beschriebenen Prinzip gezeigt, mit dem eine Livebildanzeige möglich ist. Bei diesem Verfahren werden immer das neueste und das direkt zuvor aufgenommene Bild miteinander verrechnet. Dazu wird jeweils ermittelt, ob das neueste Bild ein Composite-Bild oder ein Weitfeldbild ist und davon abhängig die Subtraktionsrichtung bestimmt. Verschiedene Triggersignale steuern die Bildaufnahme und -verarbeitung. Auf dem Randbereich der Scheibe sind Marker vorgesehen, die die Bestimmung der Art der Teilbilder erlauben. Eine Extrahierung von räumlichen Merkmalen eines Objektes ist hierbei nicht beschrieben, da die Livebild-Anzeige lediglich in einer fokalen Ebene erfolgt.

Ausgehend vom Stand der Technik besteht die Aufgabe der Erfindung darin, ein konfokales Mikroskop mit Aperturkorrelation dahingehend weiterzubilden, dass die Erstellung einer Topografie bzw. die Erzeugung einer Stapelaufnahme auf einfache Weise ermöglicht.

Die Aufgabe wird mit einem Mikroskop mit den Merkmalen des Anspruchs 1, durch ein Verfahren mit den Merkmalen des Anspruch 2 und durch ein Computerprogramm mit den Merkmalen des Anspruchs 9 gelöst.

Ein konfokales Mikroskop gemäß der Erfindung umfasst zunächst in bekannter Weise eine Beleuchtungsvorrichtung zur Beleuchtung einer Probe, welche auf einem Objekttisch platzierbar ist. Die Beleuchtungseinrichtung kann beispielsweise eine herkömmliche Beleuchtung, wie sie für Weitfeldmikroskope bekannt ist, sein. Der Objekttisch ist vorzugsweise in der horizontalen Ebene und vertikal verschiebbar ausgebildet. Alternativ oder zusätzlich kann ein Fokustrieb an einem Objektiv zur Fokusvariation vorgesehen sein.

Zwischen der Beleuchtungseinrichtung und dem Objekttisch ist eine Spinning Disk-Einheit vorgesehen, welche in ebenfalls bekannter Weise arbeitet und aufgebaut ist. Die Spinning-Disk-Einheit umfasst eine rotierbare Aperturmaske mit einer optisch offenen ersten Sektion und mindestens einer strukturierten zweiten Sektion zur Kodierung der Beleuchtung, wie dies beispielsweise in der DE 697 04 54 T2 beschrieben ist.

Die von der Probe reflektierte oder emittierte Strahlung wird mittels Objektiv durch die Aperturmaske oder eine gleichartig aufgebaute Decodermaske decodiert und von einer Bildaufnahmeeinheit erfasst.

Durch die erste Sektion hindurch wird von der Bildaufnahmeeinheit ein erstes Bild (Weitfeldbild) erfasst, während durch die zweite Sektion hindurch ein zweites Bild (so genanntes Composit-Bild) dekodiert und erfasst. Das Composit-Bild enthält neben den konfokalen Anteilen aber auch Anteile des Weitfeldbildes. Daher muss in der Regel das Weitfeldbild vom Composit-Bild subtrahiert werden, um das konfokale Bild zu erhalten.

Dieser und weitere Verarbeitungsschritte werden zur Erzeugung des konfokalen Bildes in der Bildverarbeitungseinheit mit einem erfindungsgemäßen Verfahren durchgeführt.

Die Erfindung umfasst auch ein Datenverarbeitungsprogramm mit Programmcodemitteln, das in einer Bildverarbeitungseinheit eines gattungsgemäßen konfokalen Mikroskops ausführbar ist, um die Verfahrensschritte des erfindungsgemäßen Verfahrens automatisiert abzuarbeiten.

Vorteilhafterweise kann das Datenverarbeitungsprogramm auch in einer Bildverarbeitungseinheit eines gattungsgemäßen konfokalen Mikroskops (beispielsweise als Firmware-update) implementiert werden, um Topografien von Proben zu erstellen. Dazu weist es eine Kommunikationsschnittstelle zu einer Steuereinheit des Mikroskops auf, um Fokuspositionen auszulesen oder anzusteuern.

Zur Erzeugung eines Topografie der Probe sind Stapelbilder geeignet, welche an verschieden vertikalen Fokuspositionen aufgenommen werden. Die verschiedenen vertikalen Fokuspositionen können durch vertikale Verlagerung des Objekttisches und/oder durch Fokuseinstellung des Objektives (Fokustrieb) eingestellt werden. Auf diese Weise lassen sich insbesondere geometrische Strukturen, Kanten usw. mit einer erweiterten Tiefenschärfe darstellen.

Dies gilt insbesondere für die Darstellung von technischen Oberflächen zum Beispiel zur Ermittlung von Rauheitskennwerten.

Erfindungsgemäß wird nun während der Bildaufnahme der Objekttisch und/oder der Fokustrieb kontinuierlich in vertikaler Richtung verfahren, während die ersten und zweiten Bilder fortlaufend alternierend erfasst werden. Zu jedem Bild wird nun die vorzugsweise mit einem Positionserfassungsmittel erfasste oder voreingestellte Fokusposition des Objekttisches und/oder Fokustriebes zum Zeitpunkt der Aufnahme als Metadatum gespeichert.

Diese Speicherung kann für die verschiedenen Bildarten in separaten oder gemeinsamen Stapeln erfolgen.

Zur Berechnung eines konfokalen Bildes an einer bestimmten Fokusposition werden immer drei der kontinuierlich aufgenommen Bilder verrechnet, wobei entweder zwei erste (Weitfeld-) oder zwei zweite (Composit-) Bilder zu einem Zwischenbild interpoliert und mit einem Bild des jeweils anderen Bildtyps (zweites oder erstes Bild) zu einem konfokalen Bild verrechnet werden, welches vorzugsweise gemeinsam mit der zugehörigen Fokusposition als Metadatum in einem Bildstapel gespeichert wird. Dabei ist selbstverständlich die Subtraktionsrichtung (Composit- MINUS Weifeldbild) zu beachten.

Die Topografie der Probe lässt sich nun auf bekannte Weise aus den konfokalen Bildern an verschiedenen Fokuspositionen ermitteln. Die Topografie ergibt sich dabei aus der Auswertung der Intensität entlang der Stapelrichtung. Das Vorgehen dazu ist beispielsweise in R. Leach: "Optical Measurement of Surface Topography" beschrieben.

Die Vorteile der Erfindung sind insbesondere darin zu sehen, dass es auf schnelle und einfache Art möglich ist, für verschiedene Fokuspositionen konfokale Bilder zu berechnen, ohne dass dazu jeweils auf einer Fokusposition verharrt werden muss, was insbesondere bei Stapelaufnahmen zu einer wesentlich Reduzierung der Gesamtmesszeit führt.

Bevorzuge Ausgestaltungen der Erfindung sind in den Unteransprüchen angegeben.

Bei der Bildaufnahme können verschiedene Varianten Anwendung finden.

In einer bevorzugten Ausführungsform der Erfindung werden alternierend erste und zweite Bilder in einem gemischten Stapel aufgenommen. Die Anzahl beider Bildarten muss dabei nicht übereinstimmen.

Alternativ erfolgt die Aufnahme der ersten und zweiten Bilder in separaten Stapeln, das heißt, es gibt einen Weitfeld-Stapel (erste Bilder) und einen Composit-Stapel (zweite Bilder). Die Aufnahmen können dabei in gleicher oder gegenläufiger Richtung im Stack gespeichert bzw. vorgehalten werden.

Für eine verbesserte Genauigkeit kann es vorteilhaft sein, mehr als einen Composit-Stapel und/oder mehr als einen Weitfeld-Stape1 und/oder mehr als einen gemischten Stapel zu verwenden.

Für die Berechnung des Zwischenbildes für die jeweils gewünschte Fokusposition können die zweiten Bilder (Composit) auf die Position der Weitfeldbilder interpoliert werden oder umgekehrt. Es ist ebenso möglich erste und zweite Bilder auf gemeinsame neu Positionen zu interpolieren oder die zuvor genannten Möglichkeiten zu kombinieren. Das hier definierte Zwischenbild hat keinen Bezug zu solchen aus optischen Systemen bekannten Zwischenbildern. Es dient lediglich als "Zwischenstation" zwischen zwei oder mehr Bearbeitungsschritten.

Für die Berechnung des konfokalen Bildes werden mindestens drei Bilder verwendet, wobei mindestens zwei Bilder vom gleichen Typ und mindestens ein Bild vom anderen Typ erforderlich ist.

Die Erzeugung des Zwischenbildes erfolgt durch eine geeignete Interpolation beliebigen Typs. Der Fachmann kann die hierfür geeignete Interpolation auswählen. Beispielhaft seien hier genannt: polynominale Interpolation, Spline-Interpolation verschiedener Grade, nearest-neighbour-, Shepard- und Akima-Interpolation. Extrapolationen sind ebenso möglich.

Die vertikale Verstellung des Objekttisches und/oder des Fokustriebes erfolgt vorzugsweise kontinuierlich, kann in anderen Ausführungsformen der Erfindung aber auch variiert werden, beispielsweise können zur Bildaufnahme feste vorbestimmte Fokuspositionen mit oder ohne Verwendung einer Regelschleife angefahren werden, die mit den Bilddaten gespeichert werden.

Die Positionsdaten für die Fokusposition können auf alle erdenklichen Weisen gewonnen werden, mechanisch durch codierte Systeme, optische, akustische oder magnetische oder kapazitive Abstandsmessung. Ebenso ist die Verwendung von Farbe zur Gewinnung der Fokusposition möglich, wie beispielsweise im Falle der chromatisch konfokalen Mikroskopie (Lambda-Scan).

Die Geschwindigkeit des vertikalen Vorschubes und damit der vertikale Abstand zwischen den Bildern kann für die Composit-Bilder und Weitfeldbilder gleich oder voneinander verschieden sein. Alternativ ist es möglich, die Framerate der Kamera anzupassen.

Das erfindungsgemäße Verfahren kann auch mit der chromatischen Apertur-Korrelation, welche in der DE 10 2012 007 045 A1 beschrieben ist, kombiniert werden.

Weiterhin ist es möglich, in abgewandelten Ausführungsformen für die Bildaufnahme mehrere Sensoren zu verwenden. Die Aufnahmen müssen dabei nicht zwingend synchron vorgenommen werden.

Bevorzugte Varianten des erfindungsgemäßen Verfahrens werde nachfolgend anhand der Figuren näher erläutert. Dabei zeigen:
- Fig. 1:: eine schematische Darstellung einer ersten Variante eines erfindungsgemäßen Verfahrens im einem interpolierten Weitfeldbild als Zwischenbild;
- Fig. 2:: eine schematische Darstellung einer zweiten Variante eines erfindungsgemäßen Verfahrens mit einem interpolierten Composit-Bild als Zwischenbild;
- Fig. 3:: eine schematische Darstellung einer dritten Variante eines erfindungsgemäßen Verfahrens mit verschiedenartigen Zwischenbildern;
- Fig. 4:: eine schematische Darstellung einer vierten Variante eines erfindungsgemäßen Verfahrens an einer beliebigen Fokusposition;

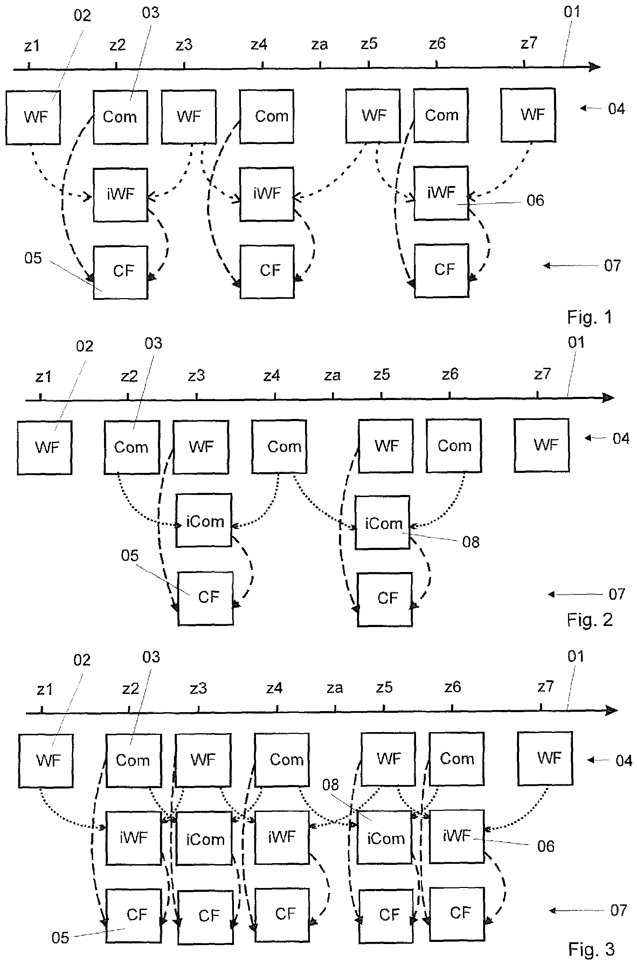

In den Fig. 1 bis 4 sind Abläufe verschiedener Varianten des erfindungsgemäßen Verfahrens schematisch dargestellt. Eine vertikale Bewegung eines Objekttisches und/oder Fokustriebes ist jeweils als z-Achse 01 dargestellt. Verschiedene Fokuspositionen z1, z2 ... z7 und za sind an der z-Achse 01 gekennzeichnet.

Erfindungsgemäß werden an den jeweiligen Fokuspositionen z1 ... z7 abwechselnd Weitfeldbilder 02 und Compositbilder 03 mittels eines oder mehrerer Bildsensoren erfasst und mit ihrer jeweiligen Fokusposition z1 ... z7 in einem Bildstapel 04 gespeichert. Selbstverständlich können für diese Speicherung auch mehrere Bildstapel verwendet werden. Die Fokuspositionen können definiert angefahren oder bei einer kontinuierlichen Tischbewegung erfasst werden.

In einer ersten Variante gemäß Fig. 1 werden zur Erzeugung eines konfokalen Bildes 05 an der Fokusposition z2 in der Bildverarbeitungseinheit zwei Weitfeldbilder 02, die jeweils an einer anderen Z-Position z1 bzw. z3 erfasst wurden, mit bekannten Bildverarbeitungsmitteln zu einem Weitfeld-Zwischenbild 06 an der Position z2 interpoliert.
Das konfokale Bild 05 der Fokusposition z2 wird nun auf bekannte Weise durch Subtraktion des Weifeld-Zwischenbildes 06 vom Composit-Bild 03 erzeugt.

Konfokale Bilder 05 werden mit ihren zugehörigen Fokuspositionen z2, z4, z6 in einem konfokalen Stapelbild 07 gespeichert.

In einer zweiten Variante gemäß Fig. 2 werden als Zwischenbild für die Fokusposition z3 (bzw. z5), an der im Aufnahmestapel 04 ein Weitfeldbild 02 vorliegt, zwei an benachbarten Fokuspositionen z2 und z4 (bzw. z4 und z6) vorliegende Composit-Bilder 03 zu einem Composit-Zwischenbild 08 an der Fokusposition z3 (bzw. z5) interpoliert. Die konfokalen Bilder 05 werden nun jeweils durch eine Subtraktion des Weifeldbildes an der Fokusposition z3 (bzw. z5) vom Composit-Zwischenbild 08 berechnet.

Die dritte Variante gemäß Fig. 3 ist eine Kombination der beiden zuvor beschriebenen. Jede Aufnahme wird sowohl direkt als auch nach einer Interpolation zur Berechnung eines der konfokalen Bildes 05 eingesetzt. In dieser Variante kann ein gemischter Zwischenbildstapel 09 zwischengespeichert werden.

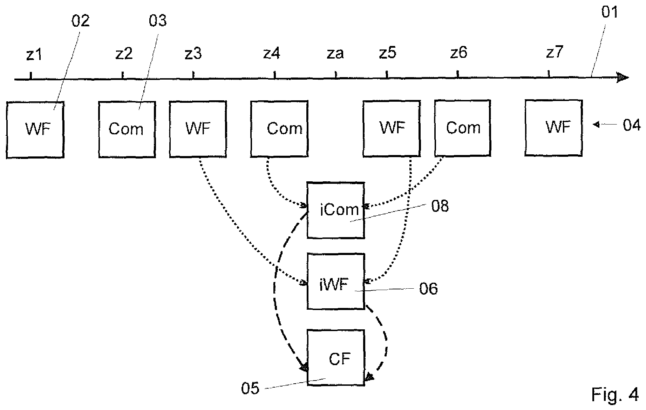

In der Fig. 4 ist dargestellt, wie ein konfokales Bild 05 für eine Fokusposition za, zu der zugehörig weder ein Weitfeldbild 02 noch ein Composit-Bild 03 vorliegt, generiert werden kann. Durch eine solche Maßnahme kann die Flexibilität des Verfahrens erhöht werden. In dieser vierten Variante werden die jeweils nächsten benachbarten Composit-Bilder 03 an den Positionen z4 und z6 zu einem Composit-Zwischenbild 08 und die benachbarten Weitfeldbilder an den Positionen z3 und z5 zu einem Weitfeld-Zwischenbild 06 interpoliert. Aus beiden Zwischenbildern 08,06 wird durch Subtraktion das konfokale Bild 05 errechnet.

### Bezugszeichenliste

- 01: z-Achse
- 02: Weitfeldbild
- 03: Composit-Bild
- 04: Bildstapel
- 05: konfokales Bild
- 06: Weitfeld-Zwischenbild
- 07: konfokales Stapelbild
- 08: Composit-Zwischenbild

## Patentansprüche

1. Konfokales Mikroskop, umfassend
- eine Beleuchtungsvorrichtung zur Beleuchtung einer Probe;
- eine Spinning-Disk-Einheit, umfassend eine rotierbare Aperturmaske mit einer optisch offenen ersten Sektion und einer strukturierten zweiten Sektion zur Kodierung der Beleuchtung;
- eine Bildaufnahmeeinheit zur Erfassung eines ersten Bildes (02), das der ersten Sektion zugeordnet ist, und eines zweiten Bildes (03), das der zweiten Sektion zugeordnet ist durch die Aperturmaske oder eine Decodermaske hindurch;
- einen vertikal verschiebbaren Objekttisch und/oder einen vertikal verschiebbaren Fokustrieb mit einem Positionserfassungsmittel zur Erfassung einer vertikalen Position (zl... z7) des Objekttisches und/oder des Fokustriebes;
- eine Bildverarbeitungseinheit zur Erzeugung eines konfokalen Bildes (05) durch Verrechnung der den Sektionen zugeordneten ersten und zweiten Bilder (02, 03);
**dadurch gekennzeichnet, dass** die Bildaufnahmeeinheit eingerichtet ist, um
- erste und zweite Bilder an unterschiedlichen vertikalen Positionen aufzunehmen;
- die ersten und die zweiten Bilder (02, 03) jeweils mit ihrer zugehörigen vertikalen Position (z1 ... z7) zwischenzugespeichern; und
- zwei erste (02) oder zwei zweite (03) Bilder zu einem Zwischenbild (06 oder 08) zu interpolieren und mit dem zweiten (03) oder ersten (02) Bild unter Beachtung der vertikaler Position (z1 ... z7) zu einem konfokalen Bild (05) einer auf dem Objekttisch platzierten Probe zu;
- die Topografie der Probe aus mehr als zwei konfokalen Bildern an verschiedenen Fokuspositionen zu ermitteln.

2. Verfahren zur Bestimmung einer Topographie einer Probe mittels eines konfokalen Mikroskops gemäß Anspruch 1, folgende Schritte umfassend:
- vertikales Bewegen eines Objekttisches und/oder eines Fokustriebes während einer alternierenden Erfassung erster und zweiter Bilder einer auf dem Objekttisch platzierten Probe, wobei zu jedem Bild eine vertikale Fokusposition als Metadatum gespeichert wird;
- Interpolation zweier erster oder zweiter Bilder zu einem Zwischenbild;
- Erzeugen eines konfokalen Bildes für eine bestimmte vertikale Position durch Verrechnen des Zwischenbildes mit dem zweiten oder ersten Bild an der Position;
- Ermitteln der Topografie der Probe aus mehr als zwei konfokalen Bildern an verschiedenen Fokuspositionen.

3. Verfahren nach Anspruch 2, **dadurch gekennzeichnet, dass** die Topografie durch einen Stapel aus mehr als zwei konfokalen Bildern gebildet wird.

4. Verfahren nach Anspruch 2, **dadurch gekennzeichnet, dass** zur Interpolation des Zwischenbildes an einer bestimmten Fokusposition zwei erste oder zweite Bilder der zu der bestimmten Fokusposition benachbarten Fokuspositionen verwendet werden.

5. Verfahren nach Anspruch 2, **dadurch gekennzeichnet, dass** die Erfassung erster und zweiter Bilder in separaten Speichern oder Speicherabschnitten erfolgt.

6. Verfahren nach Anspruch 2, **dadurch gekennzeichnet, dass** mit dem Objekttisch vorbestimmte vertikale Fokuspositionen angefahren werden.

7. Verfahren nach Anspruch 2, **dadurch gekennzeichnet, dass** der Objekttisch kontinuierlich während der Bildaufnahme bewegt wird und die zu jedem Bild gehörige Fokusposition mittels eines Positionserfassungsmittels erfasst wird.

8. Datenverarbeitungsprogramm zur Abarbeitung in einer Bildverarbeitungseinheit eines konfokalen Mikroskops gemäß Anspruch 1, **dadurch gekennzeichnet, dass** es codierte Programmbefehle zur Durchführung eines Verfahrens nach einem der Ansprüche 2 bis 7 umfasst.

9. Datenverarbeitungsprogramm nach Anspruch 8, **dadurch gekennzeichnet, dass** es eine Kommunikationsschnittstelle zu einer Steuereinheit des Mikroskops umfasst, um Fokuspositionen auszulesen oder anzusteuern.

## Claims

1. Confocal microscope comprising
an illumination device for illuminating a sample;
a spinning disk unit, comprising a rotatable aperture mask with an optically open first section and with a structured second section for coding the illumination;
an image-capturing unit for detecting a first image (02), which is assigned to the first section, and a second image (03), which is assigned to the second section, through the aperture mask or a decoder mask;
a vertically displaceable object stage and/or a vertically displaceable focus drive with a position-detecting means for detecting a vertical position (z1 ... z7) of the object stage and/or of the focus drive;
an image processor for generating a confocal image (05) by calculating the first and second images (02, 03) assigned to the sections;
**characterized in that** the image-capturing unit is configured
to record first and second images at different vertical positions;
to temporarily store each of the first and second images (02, 03) with their associated vertical position (zl ... z7); and
to interpolate two first (02) or second (03) images to give an intermediate image (06 or 08) and to with the second (03) or first (02) image, taking into account the vertical position (zl ... z7), to give a confocal image (05) of a sample placed on the object stage;
to determine the topography of the sample from more than two confocal images at different focus positions.

2. Method for determining a topography of a sample by means of a confocal microscope according to Claim 1, said method comprising the following steps:
moving an object stage and/or a focus drive vertically during alternating detection of first and second images of a sample placed on the obj ect stage, wherein a vertical focus position is stored as metadata for each image;
interpolating two first or second images to give an intermediate image;
generating a confocal image for a defined vertical position by calculating the intermediate image with the second or first image at the position;
determining the topography of the sample from more than two confocal images at different focus positions.

3. Method according to Claim 2, **characterized in that** the topography is formed by a stack of more than two confocal images.

4. Method according to Claim 2, **characterized in that**, for the interpolation of the intermediate image at a defined focus position, use is made of two first or second images of the focus positions adjacent to the defined focus position.

5. Method according to Claim 2, **characterized in that** the detection of first and second images takes place in separate memories or memory sections.

6. Method according to Claim 2, **characterized in that** predefined vertical focus positions are approached with the object stage.

7. Method according to Claim 2, **characterized in that** the object stage is moved continuously during the image capture, and the focus position belonging to each image is detected by means of a position-detecting means.

8. Data processing program for execution in an image processor of a confocal microscope according to Claim 1, **characterized in that** it comprises coded program commands for carrying out a method according to one of Claims 2 to 7

9. Data processing program according to Claim 8, **characterized in that** it comprises a communications interface to a control unit of the microscope, in order to read out or control focus positions.

## Revendications

1. Microscope confocal, comprenant
- un dispositif d'éclairage destiné à éclairer un échantillon ;
- une unité à disque rotatif, comprenant un masque d'ouverture rotatif pourvu d'une première section ouverte optique et d'une deuxième section structurée destinée au codage de l'éclairage ;
- une unité de capture d'image destinée à acquérir une première image (02), qui est associée à la première section, et une deuxième image (03), qui est associée à la deuxième section, à travers le masque d'ouverture ou à travers un masque décodeur ;
- une platine porte-objet coulissante verticalement et/ou un mécanisme de mise au point coulissant verticalement pourvu d'un moyen de détection de position destiné à détecter une position verticale (zl ... z7) de la platine porte-objet et/ou du mécanisme de mise au point ;
- une unité de traitement d'image destinée à générer une image confocale (05) par calcul des première et deuxième images (02, 03) associées aux sections ; **caractérisé en ce que** l'unité de capture d'image est conçue pour
- capturer des première et deuxième images à des positions verticales différentes ;
- mémoriser temporairement les première et deuxième images (02, 03) respectivement avec leur position verticale (zl ... z7) associée ; et
- interpoler deux premières (02) ou deux deuxièmes (03) images pour former une image intermédiaire (06 ou 08) et à, avec la deuxième (03) ou la première (02) image, en tenant compte de la position verticale (zl ... z7), générer une image confocale (05) d'un échantillon placé sur la platine porte-objet ;
- déterminer la topographie de l'échantillon à partir de plus de deux images confocales à des positions de mise au point différentes.

2. Procédé de détermination d'une topographie d'un échantillon au moyen d'un microscope confocal selon la revendication 1, comprenant les étapes suivantes :
- déplacement vertical d'une platine porte-objet et/ou d'un mécanisme de mise au point pendant une acquisition en alternance de première et deuxièmes images d'un échantillon placé sur la platine porte-objet, une position de mise au point verticale étant mémorisée pour chaque image sous la forme de métadonnées ;
- interpolation de deux premières ou deuxièmes images pour former une image intermédiaire ;
- génération d'une image confocale pour une position verticale donnée en calculant l'image intermédiaire avec la première ou la deuxième image à la position concernée ;
- détermination de la topographie de l'échantillon à partir de plus de deux images confocales à différentes positions de mise au point.

3. Procédé selon la revendication 2, **caractérisé en ce que** la topographie est formée par une pile constituée de plus de deux images confocales.

4. Procédé selon la revendication 2, **caractérisé en ce que** pour l'interpolation de l'image intermédiaire à une position de mise au point donnée, deux premières ou deuxièmes images des positions de mise au point voisines de la position de mise au point donnée sont utilisées.

5. Procédé selon la revendication 2, **caractérisé en ce que** l'acquisition de premières ou deuxièmes images s'effectue dans des mémoires ou des portions de mémoire séparées.

6. Procédé selon la revendication 2, **caractérisé en ce que** la platine porte-objet se rend à des positions de mise au point verticales prédéfinies.

7. Procédé selon la revendication 2, **caractérisé en ce que** la platine porte-objet est déplacée continuellement pendant la capture de l'image et la position de mise au point associée à chaque image est détectée à l'aide d'un moyen de détection de position.

8. Programme de traitement de données destiné à être exécuté dans une unité de traitement de données d'un microscope confocal selon la revendication 1, **caractérisé en ce qu'**il comprend des instructions de programme codées destinées à mettre en oeuvre un procédé selon l'une des revendications 2 à 7.

9. Programme de traitement de données selon la revendication 8, **caractérisé en ce qu'**il comprend une interface de communication avec une unité de commande du microscope afin de relever ou de commander des positions de mise au point.
